# EUROPÄISCHE PATENTSCHRIFT

(11) **EP 3 112 723 B1**
(45) Veröffentlichungstag und Bekanntmachung des Hinweises auf die Patenterteilung: **23.08.2017**
(21) Anmeldenummer: 15175211.0
(22) Anmeldetag: 03.07.2015
(51) Int. Cl.: F16H 3/66

(54) **MEHRSTUFENGETRIEBE FÜR EIN FAHRZEUG**
MULTI-SPEED GEARBOX FOR A VEHICLE
DEMULTIPLICATEUR A PLUSIEURS ETAGES POUR UN VEHICULE

(43) Veröffentlichungstag der Anmeldung: 04.01.2017
(73) Patentinhaber: ZF Friedrichshafen AG, 88046 Friedrichshafen (DE)
(72) Erfinder: Beck, Stefan, 88097 Eriskirch (DE); Warth, Viktor, 88048 Friedrichshafen (DE); Wechs, Michael, 88138 Weißensberg (DE)

(56) Entgegenhaltungen:
- JP-A- 2005 061 445
- JP-A- 2006 161 927
- JP-A- 2013 228 051
- US-A1- 2005 037 889

## Beschreibung

Die vorliegende Erfindung betrifft ein Mehrstufengetriebe für ein Fahrzeug mit sechs Schaltelementen gemäß der im Oberbegriff des Patentanspruches 1 näher definierten Art.

Beispielsweise aus der Druckschrift US 7 344 470 B2 ist ein Mehrstufengetriebe in Planetenbauweise bekannt. Das Automatikgetriebe weist sechs Schaltelemente aus auf, mit denen sieben Vorwärtsgänge schaltbar sind, wobei ein Vorschaltradsatzes als Minus-Planetenradsatz und ein Hauptschaltradsatz als 5-Welleneinheit vorgesehen sind. Der Hauptschaltradsatz umfasst zwei Planetenradsätze, die über einen Stufenplaneten miteinander gekoppelt sind. Beide Planetenradsätze des Hauptschaltradsatzes sind als Plus-Planetenradsätze ausgeführt. Aufgrund der höheren Anzahl von erforderlichen Elementen beim Plus-Planetenradsatz wird in nachteiliger Weise nicht nur der Bauraumbedarf erhöht, sondern auch die Herstellungskosten des Mehrstufengetriebes.

Auch aus den Druckschriften JP 2006-161927 A, US 2005/0037889 A1, JP 2013-228051 A und JP 2005-61445 A sind verschiedene Mehrstufengetriebe in Planetenbauweise bekannt, bei denen mittels selektivem Schließen von jeweils zwei von sechs Schaltelementen zumindest sieben Vorwärtsgänge und zumindest ein Rückwärtsgang realisierbar sind. Bei allen diesen gattungsgemäßen Mehrstufengetrieben ist ein als einfacher Minus-Planefienradsatz ausgebildeter Vorschaltradsatz vorgesehen, bei dem ein Element mit dem Antrieb verbunden ist, ein anderes Element mit dem Gehäuse verbunden ist und ein weiteres Element mit zumindest einem Element eines Hauptradsatzes verbindbar ist, wobei der Hauptradsatz als 5-Welleneinheit ausgebildet ist mit einem ersten und einem zweiten Planetenradsatz, die über einen Stufenplaneten miteinander gekoppelt sind, und wobei zumindest eines der beiden Planetenradsätze des Hauptradsatzes als Minus-Planetenradsatz ausgeführt ist.

Der vorliegenden Erfindung liegt die Aufgabe zu Grunde ein Mehrstufengetriebe der eingangs beschriebenen Gattung vorzuschlagen, welches eine möglichst kompakte Bauweise aufweist und zudem kostengünstig herstellbar ist.

Diese Aufgabe wird erfindungsgemäß durch die Merkmale des Patentanspruches 1 gelöst, wobei sich vorteilhafte Ausgestaltungen aus den Unteransprüchen und der Beschreibung sowie den Zeichnungen ergeben.

Es wird ein Mehrstufengetriebe als Automatikgetriebe für ein Fahrzeug, insbesondere ein Kraftfahrzeug mit sechs Schaltelementen vorgeschlagen, durch deren selektives paarweise Schließen zumindest sieben Vorwärtsgänge und zumindest ein Rückwärtsgang realisierbar sind. Das Mehrstufengetriebe umfasst ein Vorschaltradsatz als Minus-Planetenradsatz, der dem Hauptschaltradsatz vorgeschaltet ist, so dass dem Hauptschaltradsatz über den Vorschaltradsatz unterschiedliche Drehzahlen zugeführt werden. Da ein Element des Vorschaltradsatzes mit dem Antrieb und ein Element des Vorschaltradsatzes mit dem Gehäuse verbunden sind sowie ein weiteres Element des Vorschaltradsatzes mit zumindest einem Element des Hauptschaltradsatzes verbindbar ist, werden dem Hauptschaltradsatz die Antriebsdrehzahl und eine von der Antriebsdrehzahl unterschiedliche Drehzahl vorgegeben. Der Hauptschaltradsatz ist als 5-Welleneinheit ausgeführt, wodurch eine kompakte Bauweise bei dem Mehrstufengetriebe ermöglicht und ein erhöhter Freiheitsgrad bei der Darstellung von unterschiedlichen Übersetzungen realisiert wird.

Um eine besonders kompakte Bauart bei dem erfindungsgemäßen Mehrstufengetriebe zu realisieren, ist zumindest einer der beiden Planetenradsätze des Hauptschaltradsatzes als Minus-Planetenradsatz ausgeführt. Aufgrund der geringen Anzahl an erforderlichen Bauteilen ergibt sich somit eine besonders kompakte Bauweise.

Um eine möglichst hohe Mehrfachnutzung von Getriebeelementen des Mehrstufengetriebes und zudem gute Verzahnungswirkungsgrade aufgrund weniger Zahnkontakte in der Leistungsflussrichtung sowie eine geringere Radsatzbelastung zu ermöglichen, ist bei dem vorgeschlagenen Mehrstufengetriebe vorgesehen, dass das Hohlrad des ersten Planetenradsatzes des Hauptschaltradsatzes über eine erste Welle des Hauptschaltradsatzes mit dem Gehäuse oder mit dem Planetenradträger des Vorschaltradsatzes verbindbar ist. Das Hohlrad des zweiten Planetenradsatzes des Hauptschaltradsatzes ist über eine zweite Welle des Hauptschaltradsatzes mit dem Abtrieb des Getriebes bzw. des Fahrzeuges, wie zum Beispiel einem Verteiler- oder Differenzialgetriebe verbunden. Der Planetenradträger des Hauptschaltradsatzes ist über eine dritte Welle des Hauptschaltradsatzes mit dem Planetenradträger des Vorschaltradsatzes verbindbar. Das Sonnenrad des ersten Planetenradsatzes des Hauptschaltradsatzes ist über eine vierte Welle des Hauptschaltradsatzes mit dem Antrieb, also mit dem Fahrantrieb, und mit dem Hohlrad des Vorschaltradsatzes verbindbar. Das Sonnenrad des zweiten Planetenradsatzes des Hauptschaltradsatzes ist über eine fünfte Welle des Hauptschaltradsatzes mit dem Gehäuse, also dem Getriebegehäuse oder dergleichen, und/oder mit dem Antrieb verbindbar.

Im Rahmen einer besonders bevorzugten Ausführungsvariante der Erfindung kann vorgesehen sein, dass sowohl der erste Planetenradsatz als auch der zweite Planetenradsatz des Hauptschaltradsatzes als Minus-Planetenradsätze ausgeführt sind. Bei dieser Ausführungsvariante ergibt sich ein noch geringerer Bauraumbedarf, da beide Planetenradsätze des Hauptschaftradsatzes bauartbedingt weniger Bauteile umfassen. Gleichwohl der sehr kompakten Bauweise ergeben sich neben möglichen Zusatzgängen mindestens acht Vorwärtsgänge und drei mögliche Rückwärtsgänge.

Aber auch bei weiteren bevorzugten Ausführungsvarianten, bei denen zumindest einer der Planetenradsätze des Hauptschaltradsatzes ein Minus-Planetenradsatz ist, ergeben sich mindestens acht bis neun Vorwärtsgänge und mindestens ein bis zwei Rückwärtsgänge bei gegenüber dem Stand der Technik wesentlich kompakterer Bauweise.

Ein Minus-Planetenradsatz weist bekanntlich an dem Planetenradträger verdrehbar gelagerte Planetenräder auf, die mit dem Sonnenrad und dem Hohlrad dieses Planetenradsatzes kämmen, so dass sich das Hohlrad bei festgehaltenem Planetenradträger und drehendem Sonnenrad in zur Sonnenraddrehrichtung entgegengesetzter Richtung dreht. Ein Plus-Planetenradsatz weist bekanntlich an seinem Planetenradträger verdrehbar gelagerte und miteinander in Zahneingriff stehende innere und äußere z.B. durch den Stufenplaneten gebildete Planetenräder auf, wobei das Sonnenrad dieses Planetenradsatzes mit den inneren Planetenrädern und das Hohlrad dieses Planetenradsatzes mit den äußeren Planetenrädern bzw. dem Stufenplanet kämmen, so dass sich das Hohlrad bei festgehaltenem Planetenradträger und drehendem Sonnenrad in zur Sonnenraddrehrichtung gleicher Richtung dreht.

Als Schaltelemente sind schaltbare Verbindungen zwischen zwei Elementen des Getriebes zu verstehen, wobei das zwischen diesen beiden Elementen zu übertragene Drehmoment mittels Kraftschluss bzw. Reibschluss oder mittels Formschluss übertragen wird. Sind beide Elemente der schaltbaren Verbindung rotierbar ausgeführt, so wird das Schaltelement als Kupplung bezeichnet und wenn nur eines der beiden Elemente der schaltbaren Verbindung rotiert, wird das Schaltelement als Bremse bezeichnet. Darüber hinaus ist auch die geometrische Lage bzw. Reihenfolge der einzelnen Schaltelemente frei wählbar, so lange es die Bindbarkeit der Elemente zulässt. Auf diese Weise können einzelne Elemente beliebig in ihrer Lage verschoben werden. Ausführungsbeispiele eines kraftschlüssigen Schaltelements sind z.B. Lamellenkupplungen oder-bremsen, Bandbremsen, Konuskupplungen oder -bremsen, elektromagnetische Kupplungen, Magnetpulverkupplungen und elektrorheologische Kupplung. Ausführungsbeispiele für ein formschlüssiges Schaltelement sind Klauenkupplungen oder -bremsen und Zahnkupplungen. Als Schaltelemente können somit generell sowohl reib- als auch formschlüssige Schaltelemente eingesetzt werden.

Das vorgeschlagene Mehrstufengetriebe kann je nach Ausführungsvariante sowohl in koaxialer Bauweise ausgeführt werden, bei der der Antrieb und der Abtrieb koaxial zueinander angeordnet sind. Es ist jedoch auch denkbar, dass ein seitlicher Abtrieb für eine Front-Quer- oder eine Heck-Queranordnung im Fahrzeug vorgesehen wird.

Nachfolgend wird die vorliegende Erfindung anhand der Zeichnungen weiter erläutert. Es zeigen:
Fig. 1 eine schematische Ansicht einer ersten Ausführungsvariante eines erfindungsgemäßen Mehrstufengetriebes mit koaxialem Antrieb und Abtrieb und mit Minus-Planetenradsätzen beim Hauptschaltradsatz;
Fig. 2 ein beispielhaft angegebenes Schaltschema für die erste Ausführungsvariante gemäß Fig. 1;
Fig. 3 eine schematische Ansicht einer zweiten Ausführungsvariante des Mehrstufengetriebes mit seitlichem Abtrieb und mit einem Minus- und einem Plus-Planetenradsatz beim Hauptschaltradsatz;
Fig. 4 ein beispielhaft angegebenes Schaltschema für die zweite Ausführungsvariante gemäß Fig. 3;
Fig. 5 eine schematische Ansicht einer dritten Ausführungsvariante des Mehrstufengetriebes mit seitlichem Abtrieb und mit einem Minus- und einem Plus-Planetenradsatz beim Hauptschaltradsatz; und
Fig. 6 ein beispielhaft angegebenes Schaltschema für die dritte Ausführungsvariante gemäß Fig. 5;

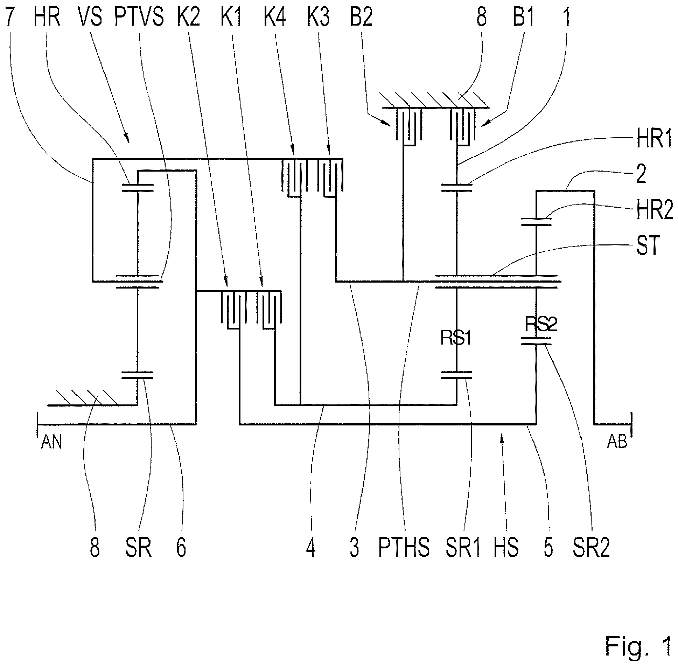

In den Figuren 1 bis 6 sind verschiedene Ausführungsvarianten eines erfindungsgemäßen Mehrstufengetriebes als Automatikgetriebe mit mindestens sieben Vorwärtsgängen G1, G2, G3, G4, G5, G5,1, G5,2, G5,3, G6, G7, G8, G9, Z1, Z2 und zumindest einem Rückwärtsgang R1, R2, R3 eines Fahrzeuges, insbesondere eines Kraftfahrzeuges beispielhaft gezeigt, wobei für jede Ausführungsvariante beispielhaft ein Schaltschema zum Realisieren der verschiedenen Gangstufen dargestellt ist.

Unabhängig von den jeweiligen Ausführungsvarianten ist das erfindungsgemäße Mehrstufengetriebe lediglich anhand Getrieberadsatzschemata dargestellt. Als Getriebeeingang ist schematisch ein Antrieb AN und als Getriebeausgang schematisch ein Abtrieb AB dargestellt. Das mit 8 bezeichnete Getriebegehäuse ist lediglich schematisch angedeutet. Der Antrieb AN kann beispielsweise mit einem nicht weiter dargestellten Fahrantrieb, wie z.B. einem Verbrennungsmotor oder einer elektrischen Maschine, vorzugsweise über einen Drehmomentwandler mit zum Beispiel einem Torsionsschwingungsdämpfer verbunden sein. Der Abtrieb AB kann beispielsweise mit einem nicht weiter dargestellten Verteilergetriebe oder dergleichen verbunden sein.

Unabhängig von den jeweiligen Ausführungsvarianten umfasst das Mehrstufengetriebe sechs Schaltelemente B1, B2, K1, K2, K3, K4, die durch eine erste Bremse und eine zweite Bremse sowie durch eine erste Kupplung, zweite Kupplung, dritte Kupplung und vierte Kupplung gebildet werden. Durch deren selektives paarweise Schließen werden zumindest sieben Vorwärtsgänge G1, G2, G3, G4, G5, G5,1, G5,2, G5,3, G6, G7, G8, G9, Z1, Z2 und zumindest einen Rückwärtsgang R1, R2, R3 realisiert.

Das Mehrstufengetriebe umfasst einen Vorschaltradsatzes VS als Minus-Planetenradsatz. Eines der Elemente des Vorschaltradsatzes VS ist mit dem Antrieb AN, ein weiteres Element des Vorschaltradsatzes VS ist mit dem Gehäuse 8 verbunden. Ferner ist das letzte Element des Vorschaltradsatzes VS mit zumindest einem Element eines Hauptschaltradsatzes HS verbindbar, wobei verbunden bedeutet, dass die Elemente unlösbar miteinander verbunden sind, wobei eventuell ein weiteres Element zum festen Verbinden eingesetzt wird. Dagegen bedeutet verbindbar, dass die entsprechenden Elemente z. B. über ein Schaltelement oder dergleichen lösbar miteinander verbunden sind.

Der Hauptschaltradsatzes HS ist als 5-Welleneinheit ausgeführt, bei dem ein erster Planetenradsatz RS1 und ein zweiter Planetenradsatz RS2 vorgesehen sind, die über einen Stufenplanet ST miteinander gekoppelt sind. Um eine bauraumgünstige Anordnung bei dem Mehrstufengetriebe zu realisieren, ist vorgesehen, dass zumindest einer der Planetenradsätze RS1, RS2 des Hauptschaltradsatzes HS als Minus-Planetenradsatz ausgeführt sind. Demnach ist maximal einer der Planetenradsätze RS1, RS2 als Plus-Planetenradsatz ausgeführt, bei dem zumindest ein zusätzliches Zahnrad bzw. Planet vorgesehen ist, sodass der Stufenplanet nicht direkt, sondern über diesen zusätzlichen Planeten mit dem Sonnenrad oder Hohlrad in Eingriff steht.

Unabhängig von den Ausführungsvarianten ist der Vorschaltradsatz als Einfach-Minus-Radsatz ausgeführt, der ständig mit dem Antrieb bzw. Antriebswelle AN verbunden ist und ausgangsseitig ständig eine Drehzahl erzeugt, die über zwei als Kupplungen ausgeführte Schaltelemente auf verschiedene Elemente des Hauptschaltradsatzes HS übertragbar sind. Das Sonnenrad SR des Vorschaltradsatzes VS als Element ist gehäuseseitig festgesetzt. Der Hauptschaltradsatzes HS wird durch zwei Planetenradsätze RS1, RS2 gebildet, die über den Stufenplanet bzw. Doppelplaneten ST miteinander gekoppelt sind. Ferner sind zwei Hohlräder HR1, HR2 und zwei Sonnenräder SR1, SR2 und ein gemeinsamer Planetenradträger PTHS mit drehbar gelagertem Stufenplaneten ST vorgesehen, der zumindest mit beiden Hohlrädern HR1, HR2 und zumindest einem der Sonnenräder SR1, SR2 je nach Ausführungsvariante kämmt. Das Hohlrad HR1 des Hauptschaltradsatzes HS bildet die erste Welle 1 des Hauptschaltradsatzes HS und ist ständig nur mit einem der Schaltelemente B1, B2, K3 verbunden. Das Hohlrad HR2 des zweiten Planetenradsatzes RS2 des Hauptschaltradsatzes HS bildet die zweite Welle 2 des Hauptschaltradsatzes HS und ist ständig nur mit dem Abtrieb bzw. der Abtriebswelle AB verbunden. Der Planetenradträger PTHS des Hauptschaltradsatzes HS bildet die dritte Welle 3 des Hauptschaltradsatzes HS und ist über eine der Kupplungen als Schaltelemente K1, K3 mit dem Planetenradträger PTUS des Vorschaltradsatzes VS verbindbar. Das Sonnenrad SR1 des ersten Planetenradsatzes RS1 des Hauptschaltradsatzes HS bildet die vierte Welle 4 des Hauptschaltradsatzes HS und ist über eine der Kupplungen als Schaltelemente K1, K2 mit der Antriebswelle bzw. dem Antrieb AN verbindbar und ist ständig mit einer weiteren Kupplung als Schaltelement K4 verbunden. Das Sonnenrad SR2 des zweiten Planetenradsatzes RS2 des Hauptschaltradsatzes HS bildet die fünfte Welle 5 des Hauptschaltradsatzes HS und ist ständig zumindest mit zumindest einer Kupplung und/oder zumindest einer Bremse als Schaltelemente K2, B1 verbunden.

In Fig. 1 ist eine Prinzipdarstellung des Mehrstufengetriebes anhand einer ersten möglichen Ausführungsvariante dargestellt, bei der ein koaxialer Antrieb AN und Abtrieb AB vorgesehen ist. Der Hauptschaltradsatzes HS umfasst als ersten Planetenradsatz RS1 und als zweiten Planetenradsatz RS2 jeweils ein Minus-Planetenradsatz. Dies bedeutet, dass der an dem gemeinsamen Planetenradträger PTHS des Hauptschaltradsatzes HS gelagerte Stufenplanet ST direkt sowohl mit den Sonnenrädern SR1, SR2 als auch mit den Hohlrädern HR1, HR2 der beiden Planetenradsätze RS1, RS2 kämmt. Ferner ist der Antrieb AN über eine sechste Welle 6 mit dem Hohlrad HR des Vorschaltradsatzes VS verbunden und das Sonnenrad SR des Vorschaltradsatzes VS ist mit dem Gehäuse 8 verbunden. Der Planetenradträger PTUS des Vorschaltradsatzes VS ist über eine siebente Welle 7 und über die vierte Kupplung als Schaltelement K4 und über die vierte Welle 4 des Hauptschaltradsatzes HS mit dem Sonnenrad SR1 des ersten Planetenradsatzes RS1 des Hauptschaltradsatzes HS verbindbar, wobei der Planetenradträger PTUS des Vorschaltradsatzes VS über die siebente Welle 7 und über die dritte Kupplung als Schaltelement K3 sowie über die dritte Welle 3 des Hauptschaltradsatzes HS mit dem Planetenradträger PTHS des Stufenplanets ST des Hauptschaltradsatzes HS verbindbar ist. Zudem ist der Abtrieb AB über die zweite Welle 2 des Hauptschaltradsatzes HS mit dem Hohlrad HR2 des zweiten Planetenradsatzes RS2 des Hauptschaltradsatzes HS verbunden und das Sonnenrad SR1 des ersten Planetenradsatzes RS1 des Hauptschaltradsatzes HS ist über die vierte Welle 4 des Hauptschaltradsatzes HS und über die erste Kupplung als Schaltelement K1 sowie über die sechste Welle 6 mit dem Antrieb AN und mit dem Hohlrad HR des Vorschaltradsatzes VS verbindbar, wobei das Sonnenrad SR1 des ersten Planetenradsatzes RS1 des Hauptschaltradsatzes HS über die vierte Welle 4 des Hauptschaltradsatzes HS und über die erste Kupplung als Schaltelement K1 sowie über die zweite Kupplung als Schaltelement K2 und über die fünfte Welle 5 des Hauptschaltradsatzes HS mit dem Sonnenrad SR2 des zweiten Planetenradsatzes RS2 des Hauptschaltradsatzes HS verbindbar ist. Zudem ist das zweite Sonnenrad SR2 des zweiten Planetenradsatzes RS2 des Hauptschaltradsatzes HS über die fünfte Welle 5 des Hauptschaltradsatzes HS und über die zweite Kupplung als Schaltelement K2 sowie über die sechste Welle 6 mit dem Antrieb AN und mit dem Hohlrad HR des Vorschaltradsatzes VS verbindbar. Darüber hinaus ist der Planetenradträger PTHS des Stufenplanets ST des Hauptschaltradsatzes HS über die dritte Welle 3 und über die zweite Bremse als Schaltelement B2 mit dem Gehäuse 8 verbindbar und das Hohlrad HR1 des ersten Planetenradsatzes RS1 des Hauptschaltradsatzes HS ist über die erste Welle 1 des Hauptschaltradsatzes HS und über die erste Bremse als Schaltelement B1 mit dem Gehäuse 8 verbindbar.

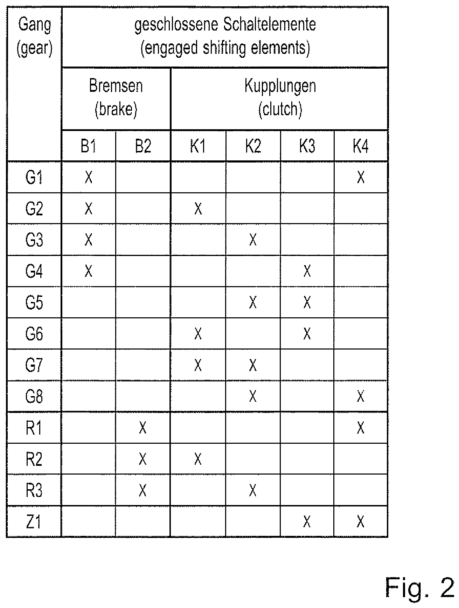

In Fig. 2 ist beispielhaft ein Schaltschema der ersten Ausführungsvariante gemäß Fig. 1 dargestellt, indem die jeweils für eine Gangstufe zu schließenden bzw. zu aktivierenden Schaltelemente durch ein X markiert sind. Im Einzelnen ergibt sich, dass zum Realisieren des ersten Vorwärtsganges G1 die erste Bremse als Schaltelement B1 und die vierte Kupplung als Schaltelement K4 geschlossen sind, dass zum Realisieren des zweiten Vorwärtsganges G2 die erste Bremse als Schaltelement B1 und die erste Kupplung als Schaltelement K1 geschlossen sind, dass zum Realisieren des dritten Vorwärtsganges G3 die erste Bremse als Schaltelement B1 und die zweite Kupplung als Schaltelement K2 geschlossen sind, dass zum Realisieren des vierten Vorwärtsganges G4 die erste Bremse als Schalt-element B1 und die dritte Kupplung als Schaltelement K3 geschlossen sind, dass zum Realisieren des fünften Vorwärtsganges G5 die zweite Kupplung als Schaltelement K2 und die dritte Kupplung als Schaltelement K3 geschlossen sind, dass zum Realisieren des sechsten Vorwärtsganges G6 die erste Kupplung als Schalt-element K1 und die dritte Kupplung als Schaltelement K3 geschlossen sind, dass zum Realisieren des siebenten Vorwärtsganges G7 die erste Kupplung als Schalt-element K1 und die zweite Kupplung als Schaltelement K2 geschlossen sind, und dass zum Realisieren des achten Vorwärtsganges G8 eine zweite Kupplung als Schaltelement K2 und eine vierte Kupplung als Schaltelement K4 geschlossen sind.

Zum Realisieren des ersten Rückwärtsganges R1 sind die zweite Bremse als Schaltelement B2 und die vierte Kupplung als Schaltelement K4 geschlossen. Zum Realisieren des zweiten Rückwärtsganges R2 sind die zweite Bremse als Schaltelement B2 und die erste Kupplung als Schaltelement K1 geschlossen. Zum Realisieren des dritten Rückwärtsganges R3 sind die zweite Bremse als Schaltelement B2 und die zweite Kupplung als Schaltelement K2 geschlossen. Zum Realisieren des Zusatzganges Z1 sind die dritte Kupplung als Schaltelement K3 und die vierte Kupplung als Schaltelement K4 geschlossen.

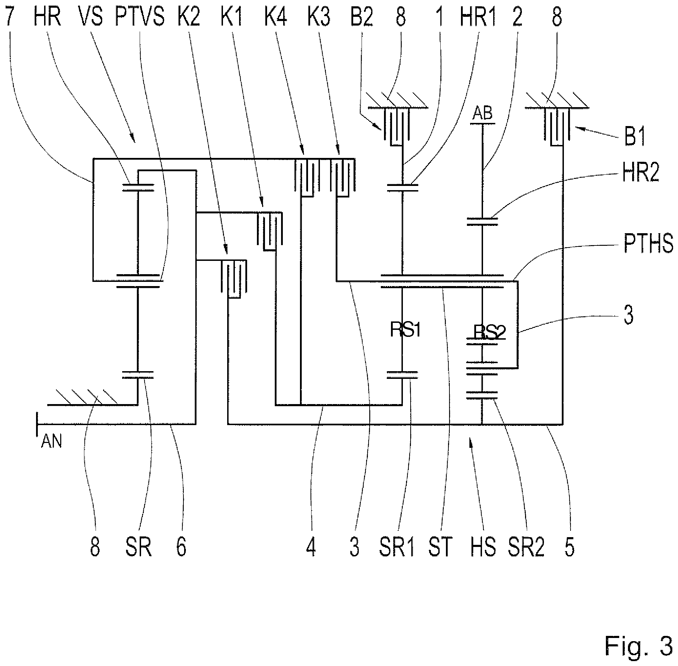

In Fig. 3 ist eine zweite Ausführungsvariante des erfindungsgemäßen Mehrstufengetriebes dargestellt, bei der ein seitlicher Abtrieb AB vorgesehen ist, wobei der erste Planetenradsatz RS1 als Minus-Planetenradsatz und der zweite Planetenradsatz RS2 des Hauptschaltradsatzes HS als Plus-Planetenradsatz ausgeführt sind. Dies bedeutet, dass der Stufenplanet ST bei dem ersten Planetenradsatz sowohl mit dem Hohlrad HR1 als auch mit dem Sonnenrad SR1 des ersten Planetenradsatzes RS1 kämmt und dass der Stufenplanet ST bei dem zweiten Planetenradsatz RS2 nur mit dem Hohlrad HR2 des zweiten Planetenradsatzes kämmt und mit einem weiteren Planeten in Eingriff steht, welcher mit dem Sonnenrad SR2 des zweiten Planetenradsatzes RS2 kämmt. Der Antrieb AN ist über eine sechste Welle 6 mit dem Hohlrad HR des Vorschaltradsatzes VS verbunden. Ferner ist das Sonnenrad SR des Vorschaltradsatzes VS mit dem Gehäuse 8 verbunden und der Planetenradträger PTUS des Vorschaltradsatzes VS ist über eine siebente Welle 7 und über die dritte Kupplung als Schaltelement K3 sowie über die dritte Welle 3 des Hauptschaltradsatzes HS mit dem Planetenradträger PT des Stufenplanets ST des Hauptschaltradsatzes HS verbindbar, wobei der Planetenradträger PT des Vorschaltradsatzes VS über die siebente Welle 7 und über die vierte Kupplung als Schaltelement K4 sowie über die vierte Welle 4 mit dem Sonnenrad SR1 des ersten Planetenradsatzes RS1 des Hauptschaltradsatzes HS verbindbar ist. Das Sonnenrad SR1 des ersten Planetenradsatzes RS1 des Hauptschaltradsatzes HS ist über die vierte Welle 4 des Hauptschaltradsatzes HS und über die erste Kupplung als Schaltelement K1 sowie über die sechste Welle 6 mit dem Antrieb AN und mit dem Hohlrad HR des Vorschaltradsatzes VS verbindbar. Das Sonnenrad SR2 des zweiten Planetenradsatzes RS2 des Hauptschaltradsatzes HS ist über die fünfte Welle 5 des Hauptschaltradsatzes HS und über die zweite Kupplung als Schaltelement K2 sowie über die sechste Welle 6 mit dem Antrieb AN und mit dem Hohlrad HR des Vorschaltradsatzes VS verbindbar, wobei das Sonnenrad SR2 des zweiten Planetenradsatzes RS2 des Hauptschaltradsatzes HS über die fünfte Welle 5 des Hauptschaltradsatzes HS und über die zweite Kupplung als Schaltelement K2 sowie über die sechste Welle 6 und über die erste Kupplung als Schaltelement K1 sowie über die vierte Welle 4 des Hauptschaltradsatzes HS mit dem Sonnenrad SR1 des ersten Planetenradsatzes RS1 des Hauptschaltradsatzes HS verbindbar ist, und wobei das Sonnenrad SR2 des zweiten Planetenradsatzes RS2 des Hauptschaltradsatzes HS über die fünfte Welle 5 des Hauptschaltradsatzes HS und über die erste Bremse als Schaltelement B1 mit dem Gehäuse 8 verbindbar ist. Das Hohlrad HR2 des zweiten Planetenradsatzes RS2 des Hauptschalfiradsatzes HS ist über die zweite Welle 2 des Hauptschaltradsatzes HS mit dem Abtrieb AB verbunden, und das Hohlrad HR1 des ersten Planetenradsatzes RS1 des Hauptschaltradsatzes HS ist über die erste Welle 1 des Hauptschaltradsatzes HS und über eine zweite Bremse als Schaltelement B2 mit dem Gehäuse 8 verbindbar.

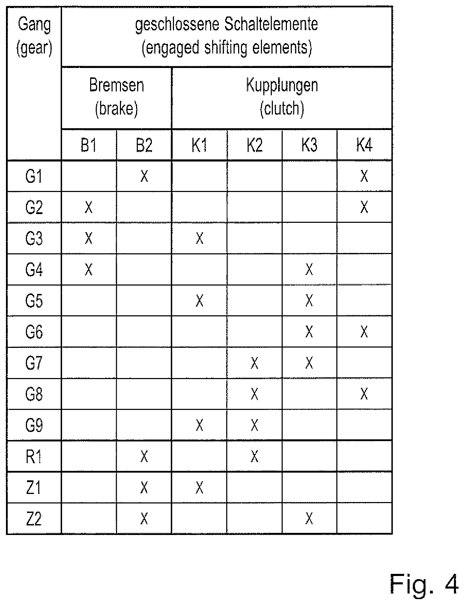

In Fig. 4 ist beispielhaft ein Schaltschema der zweiten Ausführungsvariante gemäß Fig. 3 dargestellt, in dem die jeweils für eine Gangstufe zu schließenden bzw. zu aktivierenden Schaltelemente durch ein X markiert sind. Im Einzelnen ergibt sich, dass zum Realisieren des ersten Vorwärtsganges G1 die zweite Bremse als Schaltelement B2 und die vierte Kupplung als Schaltelement K4 geschlossen sind, dass zum Realisieren des zweiten Vorwärtsganges G2 die erste Bremse als Schaltelement B1 und die vierte Kupplung als Schaltelement K4 geschlossen sind, dass zum Realisieren des dritten Vorwärtsganges G3 die erste Bremse als Schaltelement B1 und die erste Kupplung als Schaltelement K1 geschlossen sind, dass zum Realisieren des vierten Vorwärtsganges G4 die erste Bremse als Schaltelement B1 und die dritte Kupplung als Schaltelement K3 geschlossen sind, dass zum Realisieren des fünften Vorwärtsganges G5 die erste Kupplung als Schaltelement K1 und die dritte Kupplung als Schaltelement K3 geschlossen sind, dass zum Realisieren des sechsten Vorwärtsganges G6 die dritte Kupplung als Schaltelement K3 und die vierte Kupplung als Schaltelement K4 geschlossen sind, dass zum Realisieren des siebenten Vorwärtsganges G7 die zweite Kupplung als Schaltelement K2 und die dritte Kupplung als Schaltelement K3 geschlossen sind, dass zum Realisieren des achten Vorwärtsganges G8 die zweite Kupplung als Schaltelement K2 und die vierte Kupplung K4 geschlossen sind, und dass zum Realisieren des neunten Vorwärtsganges G9 die erste Kupplung als Schaltelement K1 und die zweite Kupplung als Schaltelement K2 geschlossen sind.

Zum Realisieren des ersten Rückwärtsganges R1 sind die zweite Bremse als Schaltelement B2 und die zweite Kupplung als Schaltelement K2 geschlossen. Zum Realisieren des ersten Zusatzganges Z1 sind die zweite Bremse als Schaltelement B2 und die erste Kupplung als Schaltelement K1 geschlossen. Zum Realisieren des zweiten Zusatzganges Z2 sind die zweite Bremse als Schaltelement B2 und die dritte Kupplung als Schaltelement K3 geschlossen.

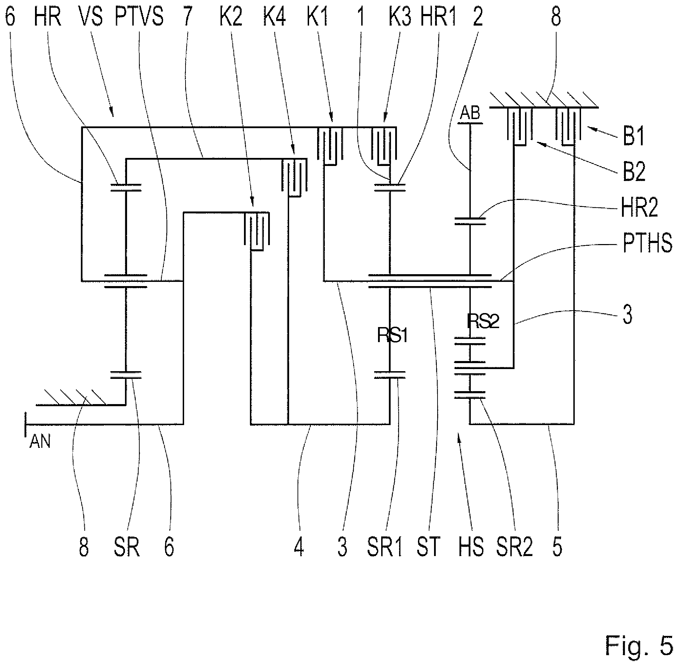

In Fig. 5 ist eine dritte Ausführungsvariante des erfindungsgemäßen Mehrstufengetriebes dargestellt, bei der ein seitlicher Abtrieb AB vorgesehen ist, wobei der erste Planetenradsatz RS1 als Minus-Planetenradsatz und der zweite Planetenradsatz RS2 des Hauptschaltradsatzes HS als Plus-Planetenradsatz ausgeführt sind. Dies bedeutet, dass der Stufenplanet ST bei dem ersten Planetenradsatz sowohl mit dem Hohlrad HR1 als auch mit dem Sonnenrad SR1 des ersten Planetenradsatzes RS1 kämmt und dass der Stufenplanet ST bei dem zweiten Planetenradsatz RS2 nur mit dem Hohlrad HR2 des zweiten Planetenradsatzes kämmt und mit einem weiteren Planeten in Eingriff steht, welcher mit dem Sonnenrad SR2 des zweiten Planetenrad-satzes RS2 kämmt. Der Antrieb AN ist über eine sechste Welle 6 mit dem Planetenradträger PTUS des Vorschaltradsatzes VS verbunden. Das Sonnenrad SR des Vorschaltradsatzes VS ist mit dem Gehäuse 8 verbunden. Der Planetenradträger PTUS des Vorschaltradsatzes VS ist über eine sechste Welle 6 und über die dritte Kupplung als Schaltelement K3 sowie über die erste Welle 1 des Hauptschaltradsatzes HS mit dem Hohlrad HR1 des ersten Planetenradsatzes RS1 des Hauptschaltradsatzes HS verbindbar, wobei der Planetenradträger PTUS des Vorschaltradsatzes VS über eine sechste Welle 6 und über die erste Kupplung als Schaltelement K1 sowie über die dritte Welle 3 des Hauptschaltradsatzes HS mit dem Planetenradträger PTHS des Stufenplanets ST des Hauptschaltradsatzes HS verbindbar ist. Das Sonnenrad SR1 des ersten Planetenradsatzes RS1 des Hauptschaltradsatzes HS ist über die vierte Welle 4 des Hauptschaltradsatzes HS und über die zweite Kupplung als Schaltelement K2 sowie über die sechste Welle 6 mit dem Antrieb AN und mit dem Planetenradträger PTUS des Vorschaltradsatzes VS verbindbar, wobei das Sonnenrad SR1 des ersten Planetenradsatzes RS1 des ersten Planetenradsatzes RS1 des Hauptschaltradsatzes HS über die vierte Welle 4 des Hauptschaltradsatzes HS und über die vierte Kupplung als Schaltelement K4 sowie über eine siebente Welle 7 mit dem Hohlrad HR des Vorschaltradsatzes VS verbindbar ist. Das Sonnenrad SR2 des zweiten Planetenradsatzes RS2 des Hauptschaltradsatzes HS ist über die Welle 5 des Hauptschaltradsatzes HS und über die erste Bremse als Schaltelement B1 mit dem Gehäuse 8 verbindbar ist. Der Planetenradträger PTHS des Stufenplanets ST des Hauptschaltradsatzes HS ist über eine dritte Welle 3 und über die zweite Bremse als Schaltelement B2 mit dem Gehäuse 8 verbindbar und das Hohlrad HR2 des zweiten Planetenradsatzes RS2 des Hauptschaltradsatzes HS über die zweite Welle 2 des Hauptschaltradsatzes HS mit dem Abtrieb AB verbunden.

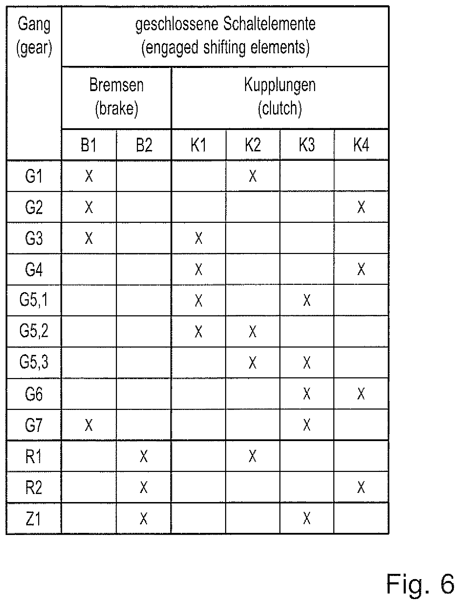

In Fig. 6 ist beispielhaft ein Schaltschema der dritten Ausführungsvariante gemäß Fig. 5 dargestellt, in dem die jeweils für eine Gangstufe zu schließenden bzw. zu aktivierenden Schaltelemente durch ein X markiert sind. Im Einzelnen ergibt sich, dass zum Realisieren des ersten Vorwärtsganges G1 die erste Bremse als Schaltelement B1 und die zweite Kupplung als Schaltelement K2 geschlossen sind, dass zum Realisieren des zweiten Vorwärtsganges G2 die erste Bremse als Schaltelement B1 und die vierte Kupplung als Schaltelement K4 geschlossen sind, dass zum Realisieren des dritten Vorwärtsganges G3 die erste Bremse als Schaltelement B1 und die erste Kupplung als Schaltelement K1 geschlossen sind, dass zum Realisieren des vierten Vorwärtsganges G4 die erste Kupplung als Schaltelement K1 und die vierte Kupplung als Schaltelement K4 geschlossen sind, dass zum Realisieren einer ersten Variante des fünften Vorwärtsganges G5, 1 die erste Kupplung als Schaltelement K1 und die dritte Kupplung als Schaltelement K3 geschlossen sind, dass zum Realisieren einer zweiten Variante des fünften Vorwärtsganges G5, 2 die erste Kupplung als Schaltelement K1 und eine zweite Kupplung als Schaltelement K2 geschlossen sind, dass zum Realisieren einer dritten Variante des fünften Vorwärtsganges G5, 3 die zweite Kupplung als Schaltelement K2 und eine dritte Kupplung als Schaltelement K3 geschlossen sind, dass zum Realisieren des sechsten Vorwärtsganges G6 die dritte Kupplung als Schaltelement K3 und die vierte Kupplung als Schaltelement K4 geschlossen sind, und dass zum Realisieren des siebenten Vorwärtsganges G7 die erste Bremse als Schaltelement B1 und die dritte Kupplung als Schaltelement K3 geschlossen sind.

Zum Realisieren des ersten Rückwärtsganges R1 sind die zweite Bremse als Schaltelement B2 und die zweite Kupplung als Schaltelement K2 geschlossen. Zum Realisieren des zweiten Rückwärtsganges R2 sind die zweite Bremse als Schaltelement B2 und die vierte Kupplung als Schaltelement K4 geschlossen. Zum Realisieren des ersten Zusatzganges Z1 sind die zweite Bremse als Schaltelement B2 und die dritte Kupplung als Schaltelement K3 geschlossen.

### Bezugszeichen

- HS: Hauptschaltradsatz
- VS: Vorschaltradsatz
- 1: erste Welle des HS
- 2: zweite Welle des HS
- 3: dritte Welle des HS
- 4: vierte Welle des HS
- 5: fünfte Welle des HS
- 6: sechste Welle
- 7: siebente Welle
- 8: Gehäuse
- AN: Antrieb
- AB: Abtrieb
- G1: erster Vorwärtsgang
- G2: Vorwärtsgang
- G3: Vorwärtsgang
- G4: Vorwärtsgang
- G5: fünfter Vorwärtsgang
- G5,1: Variante des fünften Vorwärtsgang
- G5,2: Variante des fünften Vorwärtsgang
- G5,3: Variante des fünften Vorwärtsgang
- G6: sechster Vorwärtsgang
- G7: siebenter Vorwärtsgang
- G8: achter Vorwärtsgang
- G9: neunter Vorwärtsgang
- R1: erster Rückwärtsgang
- R2: zweiter Rückwärtsgang
- R3: dritter Rückwärtsgang
- Z1: erster Zusatzgang
- Z2: zweiter Zusatzgang
- B1: erste Bremse
- B2: zweite Bremse
- K1: erste Kupplung
- K2: zweite Kupplung
- K3: dritte Kupplung
- K4: vierte Kupplung
- SR: Sonnenrad des VS
- HR: Hohlrad des VS
- PTUS: Planetenradträger des VS
- SR1: Sonnenrad des ersten RS1
- HR1: Hohlrad des ersten RS1
- PTHS: Planetenradträger des HS
- SR2: Sonnenrad des zweiten RS2
- HR2: Hohlrad des zweiten RS2

## Patentansprüche

1. Mehrstufengetriebe für ein Fahrzeug mit sechs Schaltelementen (B1, B2, K1, K2, K3, K4), mit denen durch selektives paarweise Schließen zumindest sieben Vorwärtsgänge (G1, G2, G3, G4, G5, G5,1, G5,2, G5,3, G6, G7, G8, G9, Z1, Z2) und zumindest ein Rückwärtsgang (R1, R2, R3) realisierbar sind, wobei ein Vorschaltradsatz (VS) als Minus-Planetenradsatz vorgesehen ist, bei dem ein Element des Vorschaltradsatzes (VS) mit einem Antrieb (AN) und ein Element des Vorschaltradsatzes (VS) mit einem Gehäuse (8) verbunden ist sowie ein Element des Vorschaltradsatzes (VS) mit zumindest einem Element eines Hauptschaltradsatzes (HS) verbindbar ist, wobei der Hauptschaltradsatz (HS) als 5-Welleneinheit ausgeführt ist, bei dem ein erster Planetenradsatz (RS1) und ein zweiter Planetenradsatz (RS2) vorgesehen sind, die über einen Stufenplaneten (ST) miteinander gekoppelt sind, wobei zumindest einer der Planetenradsätze (RS1, RS2) des Hauptschaltradsatzes (HS) als Minus-Planetenradsatz ausgeführt ist, **dadurch gekennzeichnet, dass** das Hohlrad (HR1) des ersten Planetenradsatzes (RS1) des Hauptschaltradsatzes (HS) über eine erste Welle (1) des Hauptschaltradsatzes (HS) mit dem Gehäuse (8) oder mit dem Planetenradträger (PTVS) des Vorschaltradsatzes (VS) verbindbar ist, dass das Hohlrad (HR2) des zweiten Planetenradsatzes (RS2) des Hauptschaltradsatzes (HS) über eine zweite Welle (2) des Hauptschaltradsatzes (HS) mit einem Abtrieb (AB) verbunden ist, dass der Planetenradträger (PTHS) des Hauptschaltradsatzes (HS) über eine dritte Welle (3) des Hauptschaltradsatzes (HS) mit dem Planetenradträger (PTVS) des Vorschaltradsatzes (VS) verbindbar ist, dass das Sonnenrad (SR1) des ersten Planetenradsatzes (RS1) des Hauptschaltradsatzes (HS) über eine vierte Welle (4) des Hauptschaltradsatzes (HS) mit dem Antrieb (AN) und mit dem Hohlrad (HR) des Vorschaltradsatzes (VS) verbindbar ist, und dass das Sonnenrad (SR2) des zweiten Planetenradsatzes (RS2) des Hauptschaltradsatzes (HS) über eine fünfte Welle (5) des Hauptschaltradsatzes (HS) mit dem Gehäuse (8) und/oder mit dem Antrieb verbindbar ist.

2. Mehrstufengetriebe nach Anspruch 1, **dadurch gekennzeichnet, dass** der erste Planetenradsatz (RS1) und der zweite Planetenradsatz (RS2) des Hauptschaltradsatzes (HS) jeweils als Minus-Planetenradsatz ausgeführt sind.

3. Mehrstufengeiriebe nach Anspruch 1 oder 2, **dadurch gekennzeichnet, dass** der Antrieb (AN) über eine sechste Welle (6) mit dem Hohlrad (HR) des Vorschaltradsatzes (VS) verbunden ist, dass das Sonnenrad (SR) des Vorschaltradsatzes (VS) mit dem Gehäuse (8) verbunden ist, dass der Planetenradträger (PTVS) des Vorschaltradsatzes (VS) über eine siebente Welle (7) und über eine vierte Kupplung als Schaltelement (K4) und über die vierte Welle (4) des Hauptschaltradsatzes (HS) mit dem Sonnenrad (SR1) des ersten Planetenradsatzes (RS1) des Hauptschaltradsatzes (HS) verbindbar ist, wobei der Planetenradträger (PTVS) des Vorschaltradsatzes (VS) über die siebente Welle (7) und über eine dritte Kupplung als Schaltelement (K3) sowie über die dritte Welle (3) des Hauptschaltradsatzes (HS) mit dem Planetenradträger (PTHS) des Stufenplanets (ST) des Hauptschaltradsatzes (HS) verbindbar ist, dass der Abtrieb (AB) über die zweite Welle (2) des Hauptschaltradsatzes (HS) mit dem Hohlrad (HR2) des zweiten Planetenradsatzes (RS2) des Hauptschaltradsatzes (HS) verbunden ist, dass das Sonnenrad (SR1) des ersten Planetenradsatzes (RS1) des Hauptschaltradsatzes (HS) über die vierte Welle (4) des Hauptschaltradsatzes (HS) und über eine erste Kupplung als Schaltelement (K1) sowie über die sechste Welle (6) mit dem Antrieb (AN) und mit dem Hohlrad (HR) des Vorschaltradsatzes (VS) verbindbar ist, wobei das Sonnenrad (SR1) des ersten Planetenradsatzes (RS1) des Hauptschaltradsatzes (HS) über die vierte Welle (4) des Hauptschaltradsatzes (HS) und über die erste Kupplung als Schaltelement (K1) sowie über eine zweite Kupplung als Schaltelement (K2) und über die fünfte Welle (5) des Hauptschaltradsatzes (HS) mit dem Sonnenrad (SR2) des zweiten Planetenradsatzes (RS2) des Hauptschaltradsatzes (HS) verbindbar ist, dass das Sonnenrad (SR2) des zweiten Planetenradsatzes (RS2) des Hauptschaltradsatzes (HS) über die fünfte Welle (5) des Hauptschaltradsatzes (HS) und über die zweite Kupplung als Schaltelement (K2) sowie über die sechste Welle (6) mit dem Antrieb (AN) und mit dem Hohlrad (HR) des Vorschaltradsatzes (VS) verbindbar ist, dass der Planetenradträger (PTHS) des Stufenplanets (ST) des Hauptschaltradsatzes (HS) über die dritte Welle (3) und über eine zweite Bremse als Schaltelement (B2) mit dem Gehäuse (8) verbindbar ist, und dass das Hohlrad (HR1) des ersten Planetenradsatzes (RS1) des Hauptschaltradsatzes (HS) über die erste Welle (1) des Hauptschaltradsatzes (HS) und über eine erste Bremse als Schaltelement (B1) mit dem Gehäuse (8) verbindbar ist.

4. Mehrstufengetriebe nach Anspruch 3, **dadurch gekennzeichnet, dass** zum Realisieren eines ersten Vorwärtsganges (G1) die erste Bremse als Schaltelement (B1) und die vierte Kupplung als Schaltelement (K4) geschlossen sind, dass zum Realisieren eines zweiten Vorwärtsganges (G2) die erste Bremse als Schaltelement (B1) und die erste Kupplung als Schaltelement (K1) geschlossen sind, dass zum Realisieren eines dritten Vorwärtsganges (G3) die erste Bremse als Schaltelement (B1) und die zweite Kupplung als Schaltelement (K2) geschlossen sind, dass zum Realisieren eines vierten Vorwärtsganges (G4) die erste Bremse als Schaltelement (B1) und die dritte Kupplung als Schaltelement (K3) geschlossen sind, dass zum Realisieren eines fünften Vorwärtsganges (G5) die zweite Kupplung als Schaltelement (K2) und die dritte Kupplung als Schaltelement (K3) geschlossen sind, dass zum Realisieren eines sechsten Vorwärtsganges (G6) die erste Kupplung als Schaltelement (K1) und die dritte Kupplung als Schaltelement (K3) geschlossen sind, dass zum Realisieren eines siebenten Vorwärtsganges (G7) die erste Kupplung als Schaltelement (K1) und die zweite Kupplung als Schaltelement (K2) geschlossen sind, und dass zum Realisieren eines achten Vorwärtsganges (G8) die zweite Kupplung als Schaltelement (K2) und die vierte Kupplung als Schaltelement (K4) geschlossen sind.

5. Mehrstufengetriebe nach Anspruch 3 oder 4, **dadurch gekennzeichnet, dass** zum Realisieren eines ersten Rückwärtsganges (R1) die zweite Bremse als Schaltelement (B2) und die vierte Kupplung als Schaltelement (K4) geschlossen sind und/oder dass zum Realisieren eines zweiten Rückwärtsganges (R2) die zweite Bremse als Schaltelement (B2) und die erste Kupplung als Schaltelement (K1) geschlossen sind und/oder dass zum Realisieren des dritten Rückwärtsganges (R3) die zweite Bremse als Schaltelement (B2) und die zweite Kupplung als Schaltelement (K2) geschlossen sind und/oder dass zum Realisieren eines Zusatzganges (Z1) die dritte Kupplung als Schaltelement (K3) und die vierte Kupplung als Schaltelement (K4) geschlossen sind.

6. Mehrstufengetriebe nach Anspruch 1, **dadurch gekennzeichnet, dass** der erste Planetenradsatz (RS1) des Hauptschaltradsatzes (HS) als Minus-Planetenradsatz und der zweite Planetenradsatz (RS2) des Hauptschaltradsatzes (HS) als Plus-Planetenradsatz ausgeführt sind.

7. Mehrstufengetriebe nach einem der vorangehenden Ansprüche 1 oder 6, **dadurch gekennzeichnet, dass** der Antrieb (AN) über eine sechste Welle (6) mit dem Hohlrad (HR) des Vorschaltradsatzes (VS) verbunden ist, dass das Sonnenrad (SR) des Vorschaltradsatzes (VS) mit dem Gehäuse (8) verbunden ist, dass der Planetenradträger (PTVS) des Vorschaltradsatzes (VS) über eine siebente Welle (7) und über eine dritte Kupplung als Schaltelement (K3) sowie über die dritte Welle (3) des Hauptschaltradsatzes (HS) mit dem Planetenradträger (PTHS) des Stufenplanets (ST) des Hauptschaltradsatzes (HS) verbindbar ist, wobei der Planetenradträger (PTVS) des Vorschaltradsatzes (VS) über die siebente Welle (7) und über eine vierte Kupplung als Schaltelement (K4) sowie über die vierte Welle (4) mit dem Sonnenrad (SR1) des ersten Planetenradsatzes (RS1) des Hauptschaltradsatzes (HS) verbindbar ist, dass das Sonnenrad (SR1) des ersten Planetenradsatzes (RS1) des Hauptschaltradsatzes (HS) über die vierte Welle (4) des Hauptschaltradsatzes (HS) und über eine erste Kupplung als Schaltelement (K1) sowie über die sechste Welle (6) mit dem Antrieb (AN) und mit dem Hohlrad (HR) des Vorschaltradsatzes (VS) verbindbar ist, dass das Sonnenrad (SR2) des zweiten Planetenradsatzes (RS2) des Hauptschaltradsatzes (HS) über die fünfte Welle (5) des Hauptschaltradsatzes (HS) und über eine zweite Kupplung als Schaltelement (K2) sowie über die sechste Welle (6) mit dem Antrieb (AN) und mit dem Hohlrad (HR) des Vorschaltradsatzes (VS) verbindbar ist, wobei das Sonnenrad (SR2) des zweiten Planetenradsatzes (RS2) des Hauptschaltradsatzes (HS) über die fünfte Welle (5) des Hauptschaltradsatzes (HS) und über die zweite Kupplung als Schaltelement (K2) sowie über die sechste Welle (6) und über die erste Kupplung als Schaltelement (K1) sowie über die vierte Welle (4) des Hauptschaltradsatzes (HS) mit dem Sonnenrad (SR1) des ersten Planetenradsatzes (RS1) des Hauptschaltradsatzes (HS) verbindbar ist, und wobei das Sonnenrad (SR2) des zweiten Planetenradsatzes (RS2) des Hauptschaltradsatzes (HS) über die fünfte Welle (5) des Hauptschaltradsatzes (HS) und über eine erste Bremse als Schaltelement (B1) mit dem Gehäuse (8) verbindbar ist, dass das Hohlrad (HR2) des zweiten Planetenradsatzes (RS2) des Hauptschaltradsatzes (HS) über die zweite Welle (2) des Hauptschaltradsatzes (HS) mit dem Abtrieb (AB) verbunden ist, und dass das Hohlrad (HR1) des ersten Planetenradsatzes (RS1) des Hauptschaltradsatzes (HS) über die erste Welle (1) des Hauptschaltradsatzes (HS) und über eine zweite Bremse als Schaltelement (B2) mit dem Gehäuse (8) verbindbar ist.

8. Mehrstufengetriebe nach Anspruch 7, **dadurch gekennzeichnet, dass** zum Realisieren eines ersten Vorwärtsganges (G1) die zweite Bremse als Schaltelement (B2) und die vierte Kupplung als Schaltelement (K4) geschlossen sind, dass zum Realisieren eines zweiten Vorwärtsganges (G2) die erste Bremse als Schaltelement (B1) und die vierte Kupplung als Schaltelement (K4) geschlossen sind, dass zum Realisieren eines dritten Vorwärtsganges (G3) die erste Bremse als Schaltelement (B1) und die erste Kupplung als Schaltelement (K1) geschlossen sind, dass zum Realisieren eines vierten Vorwärtsganges (G4) die erste Bremse als Schaltelement (B1) und die dritte Kupplung als Schaltelement (K3) geschlossen sind, dass zum Realisieren eines fünften Vorwärtsganges (G5) die erste Kupplung als Schaltelement (K1) und die dritte Kupplung als Schaltelement (K3) geschlossen sind, dass zum Realisieren eines sechsten Vorwärtsganges (G6) die dritte Kupplung als Schaltelement (K3) und die vierte Kupplung als Schaltelement (K4) geschlossen sind, dass zum Realisieren eines siebenten Vorwärtsganges (G7) die zweite Kupplung als Schaltelement (K2) und die dritte Kupplung als Schaltelement (K3) geschlossen sind, dass zum Realisieren eines achten Vorwärtsganges (G8) die zweite Kupplung als Schaltelement (K2) und die vierte Kupplung (K4) geschlossen sind, und dass zum Realisieren eines neunten Vorwärtsganges (G9) die erste Kupplung als Schaltelement (K1) und die zweite Kupplung als Schaltelement (K2) geschlossen sind.

9. Mehrstufengetriebe nach Anspruch 7 oder 8, **dadurch gekennzeichnet, dass** zum Realisieren eines ersten Rückwärtsganges (R1) die zweite Bremse als Schaltelement (B2) und die zweite Kupplung als Schaltelement (K2) geschlossen sind und/oder dass zum Realisieren eines ersten Zusatzganges (Z1) die zweite Bremse als Schaltelement (B2) und die erste Kupplung als Schaltelement (K1) geschlossen sind und/oder dass zum Realisieren eines zweiten Zusatzganges (Z2) die zweite Bremse als Schaltelement (B2) und die dritte Kupplung als Schaltelement (K3) geschlossen sind.

10. Mehrstufengetriebe nach einem der vorangehenden Ansprüche 1 oder 6, **dadurch gekennzeichnet, dass** der Antrieb (AN) über eine sechste Welle (6) mit dem Planetenradträger (PTVS) des Vorschaltradsatzes (VS) verbunden ist, dass das Sonnenrad (SR) des Vorschaltradsatzes (VS) mit dem Gehäuse (8) verbunden ist, dass der Planetenradträger (PTVS) des Vorschaltradsatzes (VS) über eine sechste Welle (6) und über eine dritte Kupplung als Schaltelement (K3) sowie über die erste Welle (1) des Hauptschaltradsatzes (HS) mit dem Hohlrad (HR1) des ersten Planetenradsatzes (RS1) des Hauptschaltradsatzes (HS) verbindbar ist, wobei der Planetenradträger (PTVS) des Vorschaltradsatzes (VS) über die sechste Welle (6) und über eine erste Kupplung als Schaltelement (K1) sowie über die dritte Welle (3) des Hauptschaltradsatzes (HS) mit dem Planetenradträger (PTHS) des Stufenplanets (ST) des Hauptschaltradsatzes (HS) verbindbar ist, dass das Sonnenrad (SR1) des ersten Planetenradsatzes (RS1) des Hauptschaltradsatzes (HS) über die vierte Welle (4) des Hauptschaltradsatzes (HS) und über eine zweite Kupplung als Schaltelement (K2) sowie über die sechste Welle (6) mit dem Antrieb (AN) und mit dem Planetenradträger (PTVS) des Vorschaltradsatzes (VS) verbindbar ist, wobei das Sonnenrad (SR1) des ersten Planetenradsatzes (RS1) des Hauptschaltradsatzes (HS) über die vierte Welle (4) des Hauptschaltradsatzes (HS) und über eine vierte Kupplung als Schaltelement (K4) sowie über eine siebente Welle (7) mit dem Hohlrad (HR) des Vorschaltradsatzes (VS) verbindbar ist, dass das Sonnenrad (SR2) des zweiten Planetenradsatzes (RS2) des Hauptschaltradsatzes (HS) über die fünfte Welle (5) des Hauptschaltradsatzes (HS) und über eine erste Bremse als Schaltelement (B1) mit dem Gehäuse (8) verbindbar ist, dass der Planetenradträger (PTHS) des Stufenplanets (ST) des Hauptschaltradsatzes (HS) über die dritte Welle (3) und über eine zweite Bremse als Schaltelement (B2) mit dem Gehäuse (8) verbindbar ist, und dass das Hohlrad (HR2) des zweiten Planetenradsatzes (RS2) des Hauptschaltradsatzes (HS) über die zweite Welle (2) des Hauptschaltradsatzes (HS) mit dem Abtrieb (AB) verbunden ist.

11. Mehrstufengetriebe nach Anspruch 10, **dadurch gekennzeichnet, dass** zum Realisieren eines ersten Vorwärtsganges (G1) die erste Bremse als Schaltelement (B1) und die zweite Kupplung als Schaltelement (K2) geschlossen sind, dass zum Realisieren eines zweiten Vorwärtsganges (G2) die erste Bremse als Schaltelement (B1) und die vierte Kupplung als Schaltelement (K4) geschlossen sind, dass zum Realisieren eines dritten Vorwärtsganges (G3) die erste Bremse als Schaltelement (B1) und die erste Kupplung als Schaltelement (K1) geschlossen sind, dass zum Realisieren eines vierten Vorwärtsganges (G4) die erste Kupplung als Schaltelement (K1) und die vierte Kupplung als Schaltelement (K4) geschlossen sind, dass zum Realisieren einer ersten Variante eines fünften Vorwärtsganges (G5, 1) die erste Kupplung als Schaltelement (K1) und die dritte Kupplung als Schaltelement (K3) geschlossen sind, dass zum Realisieren einer zweiten Variante des fünften Vorwärtsganges (G5, 2) die erste Kupplung als Schaltelement (K1) und die zweite Kupplung als Schaltelement (K2) geschlossen sind, dass zum Realisieren einer dritten Variante des fünften Vorwärtsganges (G5, 3) die zweite Kupplung als Schaltelement (K₂) und die dritte Kupplung als Schaltelement (K3) geschlossen sind, dass zum Realisieren eines sechsten Vorwärtsganges (G6) die dritte Kupplung als Schaltelement (K3) und die vierte Kupplung als Schaltelement (K4) geschlossen sind, und dass zum Realisieren eines siebenten Vorwärtsganges (G7) die erste Bremse als Schaltelement (B1) und die dritte Kupplung als Schaltelement (K3) geschlossen sind.

12. Mehrstufengetriebe nach Anspruch 10 oder 11, **dadurch gekennzeichnet, dass** zum Realisieren eines ersten Rückwärtsganges (R1) die zweite Bremse als Schaltelement (B2) und die zweite Kupplung als Schaltelement (K2) geschlossen sind, und/oder dass zum Realisieren eines zweiten Rückwärtsganges (R2) die zweite Bremse als Schaltelement (B2) und die vierte Kupplung als Schaltelement (K4) geschlossen sind, und/oder dass zum Realisieren eines ersten Zusatzganges (Z1) die zweite Bremse als Schaltelement (B2) und die dritte Kupplung als Schaltelement (K3) geschlossen sind.

## Claims

1. Multi-speed gearbox for a vehicle with six shifting elements (B1, B2, K1, K2, K3, K4) with which, by selective engaging in pairs, at least seven forward gears (G1, G2, G3, G4, G5, G5,1, G5,2, G5,3, G6, G7, G8, G9, Z1, Z2) and at least one reverse gear (R1, R2, R3) can be realized, wherein a front-mounted gear set (VS) is provided as a minus planetary gear set, in which an element of the front-mounted gear set (VS) is connected to a drive (AN) and an element of the front-mounted gear set (VS) is connected to a housing (8), and also an element of the front-mounted gear set (VS) is connectable to at least one element of a main shifting gear set (HS), wherein the main shifting gear set (HS) is designed as a 5-shaft unit, in which a first planetary gear set (RS1) and a second planetary gear set (RS2) which are coupled to each other via a stepped planetary gear (ST) are provided, wherein at least one of the planetary gear sets (RS1, RS2) of the main shifting gear set (HS) is designed as a minus planetary gear set, **characterized in that** the internal gear (HR1) of the first planetary gear set (RS1) of the main shifting gear set (HS) is connectable via a first shaft (1) of the main shifting gear set (HS) to the housing (8) or to the planetary gear carrier (PTVS) of the front-mounted gear set (VS), **in that** the internal gear (HR2) of the second planetary gear set (RS2) of the main shifting gear set (HS) is connected via a second shaft (2) of the main shifting gear set (HS) to a main drive pinion (AB), **in that** the planetary gear carrier (PTHS) of the main shifting gear set (HS) is connectable via a third shaft (3) of the main shifting gear set (HS) to the planetary gear carrier (PTVS) of the front-mounted gear set (VS), **in that** the sun gear (SR1) of the first planetary gear set (RS1) of the main shifting gear set (HS) is connectable via a fourth shaft (4) of the main shifting gear set (HS) to the drive (AN) and to the internal gear (HR) of the front-mounted gear set (VS), and **in that** the sun gear (SR2) of the second planetary gear set (RS2) of the main shifting gear set (HS) is connectable via a fifth shaft (5) of the main shifting gear set (HS) to the housing (8) and/or to the drive.

2. Multi-speed gearbox according to Claim 1, **characterized in that** the first planetary gear set (RS1) and the second planetary gear set (RS2) of the main shifting gear set (HS) are each designed as a minus planetary gear set.

3. Multi-speed gearbox according to Claim 1 or 2, **characterized in that** the drive (AN) is connected via a sixth shaft (6) to the internal gear (HR) of the front-mounted gear set (VS), **in that** the sun gear (SR) of the front-mounted gear set (VS) is connected to the housing (8), **in that** the planetary gear carrier (PTVS) of the front-mounted gear set (VS) is connectable via a seventh shaft (7) and via a fourth clutch as shifting element (K4) and via the fourth shaft (4) of the main shifting gear set (HS) to the sun gear (SR1) of the first planetary gear set (RS1) of the main shifting gear set (HS), wherein the planetary gear carrier (PTVS) of the front-mounted gear set (VS) is connectable via the seventh shaft (7) and via a third clutch as shifting element (K3) and also via the third shaft (3) of the main shifting gear set (HS) to the planetary gear carrier (PTHS) of the stepped planetary gear (ST) of the main shifting gear set (HS), **in that** the main drive pinion (AB) is connected via the second shaft (2) of the main shifting gear set (HS) to the internal gear (HR2) of the second planetary gear set (RS2) of the main shifting gear set (HS), **in that** the sun gear (SR1) of the first planetary gear set (RS1) of the main shifting gear set (HS) is connectable via the fourth shaft (4) of the main shifting gear set (HS) and via a first clutch as shifting element (K1) and also via the sixth shaft (6) to the drive (AN) and to the internal gear (HR) of the front-mounted gear set (VS), wherein the sun gear (SR1) of the first planetary gear set (RS1) of the main shifting gear set (HS) is connectable via the fourth shaft (4) of the main shifting gear set (HS) and via the first clutch as shifting element (K1) and also via a second clutch as shifting element (K2) and via the fifth shaft (5) of the main shifting gear set (HS) to the sun gear (SR2) of the second planetary gear set (RS2) of the main shifting gear set (HS), **in that** the sun gear (SR2) of the second planetary gear set (RS2) of the main shifting gear set (HS) is connectable via the fifth shaft (5) of the main shifting gear set (HS) and via the second clutch as shifting element (K2) and also via the sixth shaft (6) to the drive (AN) and to the internal gear (HR) of the front-mounted gear set (VS), **in that** the planetary gear carrier (PTHS) of the stepped planetary gear (ST) of the main shifting gear set (HS) is connectable via the third shaft (3) and via a second brake as shifting element (B2) to the housing (8), and **in that** the internal gear (HR1) of the first planetary gear set (RS1) of the main shifting gear set (HS) is connectable via the first shaft (1) of the main shifting gear set (HS) and via a first brake as shifting element (B1) to the housing (8).

4. Multi-speed gearbox according to Claim 3, **characterized in that**, for realizing a first forward gear (G1), the first brake as shifting element (B1) and the fourth clutch as shifting element (K4) are engaged, **in that**, for realizing a second forward gear (G2), the first brake as shifting element (B1) and the first clutch as shifting element (K1) are engaged, **in that**, for realizing a third forward gear (G3), the first brake as shifting element (B1) and the second clutch as shifting element (K2) are engaged, **in that**, for realizing a fourth forward gear (G4), the first brake as shifting element (B1) and the third clutch as shifting element (K3) are engaged, **in that**, for realizing a fifth forward gear (G5), the second clutch as shifting element (K2) and the third clutch as shifting element (K3) are engaged, **in that**, for realizing a sixth forward gear (G6), the first clutch as shifting element (K1) and the third clutch as shifting element (K3) are engaged, **in that**, for realizing a seventh forward gear (G7), the first clutch as shifting element (K1) and the second clutch as shifting element (K2) are engaged, and **in that**, for realizing an eighth forward gear (G8), the second clutch as shifting element (K2) and the fourth clutch as shifting element (K4) are engaged.

5. Multi-speed gearbox according to Claim 3 or 4, **characterized in that**, for realizing a first reverse gear (R1), the second brake as shifting element (B2) and the fourth clutch as shifting element (K4) are engaged, and/or **in that**, for realizing a second reverse gear (R2), the second brake as shifting element (B2) and the first clutch as shifting element (K1) are engaged, and/or **in that**, for realizing the third reverse gear (R3), the second brake as shifting element (B2) and the second clutch as shifting element (K2) are engaged, and/or **in that**, for realizing an additional gear (Z1), the third clutch as shifting element (K3) and the fourth clutch as shifting element (K4) are engaged.

6. Multi-speed gearbox according to Claim 1, **characterized in that** the first planetary gear set (RS1) of the main shifting gear set (HS) is designed as a minus planetary gear set, and the second planetary gear set (RS2) of the main shifting gear set (HS) is designed as a plus planetary gear set.

7. Multi-speed gearbox according to either of the preceding Claims 1 and 6, **characterized in that** the drive (AN) is connected via a sixth shaft (6) to the internal gear (HR) of the front-mounted gear set (VS), **in that** the sun gear (SR) of the front-mounted gear set (VS) is connected to the housing (8), **in that** the planetary gear carrier (PTVS) of the front-mounted gear set (VS) is connectable via a seventh shaft (7) and via a third clutch as shifting element (K3) and also via the third shaft (3) of the main shifting gear set (HS) to the planetary gear carrier (PTHS) of the stepped planetary gear (ST) of the main shifting gear set (HS), wherein the planetary gear carrier (PTVS) of the front-mounted gear set (VS) is connectable via the seventh shaft (7) and via a fourth clutch as shifting element (K4) and also via the fourth shaft (4) to the sun gear (SR1) of the first planetary gear set (RS1) of the main shifting gear set (HS), **in that** the sun gear (SR1) of the first planetary gear set (RS1) of the main shifting gear set (HS) is connectable via the fourth shaft (4) of the main shifting gear set (HS) and via a first clutch as shifting element (K1) and also via the sixth shaft (6) to the drive (AN) and to the internal gear (HR) of the front-mounted gear set (VS), **in that** the sun gear (SR2) of the second planetary gear set (RS2) of the main shifting gear set (HS) is connectable via the fifth shaft (5) of the main shifting gear set (HS) and via a second clutch as shifting element (K2) and also via the sixth shaft (6) to the drive (AN) and to the internal gear (HR) of the front-mounted gear set (VS), wherein the sun gear (SR2) of the second planetary gear set (RS2) of the main shifting gear set (HS) is connectable via the fifth shaft (5) of the main shifting gear set (HS) and via the second clutch as shifting element (K2) and also via the sixth shaft (6) and via the first clutch as shifting element (K1) and also via the fourth shaft (4) of the main shifting gear set (HS) to the sun gear (SR1) of the first planetary gear set (RS1) of the main shifting gear set (HS), and wherein the sun gear (SR2) of the second planetary gear set (RS2) of the main shifting gear set (HS) is connectable via the fifth shaft (5) of the main shifting gear set (HS) and via a first brake as shifting element (B1) to the housing (8), **in that** the internal gear (HR2) of the second planetary gear set (RS2) of the main shifting gear set (HS) is connected via the second shaft (2) of the main shifting gear set (HS) to the main drive pinion (AB), and **in that** the internal gear (HR1) of the first planetary gear set (RS1) of the main shifting gear set (HS) is connectable via the first shaft (1) of the main shifting gear set (HS) and via a second brake as shifting element (B2) to the housing (8).

8. Multi-speed gearbox according to Claim 7, **characterized in that**, for realizing a first forward gear (G1), the second brake as shifting element (B2) and the fourth clutch as shifting element (K4) are engaged, **in that**, for realizing a second forward gear (G2), the first brake as shifting element (B1) and the fourth clutch as shifting element (K4) are engaged, **in that**, for realizing a third forward gear (G3), the first brake as shifting element (B1) and the first clutch as shifting element (K1) are engaged, **in that**, for realizing a fourth forward gear (G4), the first brake as shifting element (B1) and the third clutch as shifting element (K3) are engaged, **in that**, for realizing a fifth forward gear (G5), the first clutch as shifting element (K1) and the third clutch as shifting element (K3) are engaged, **in that**, for realizing a sixth forward gear (G6), the third clutch as shifting element (K3) and the fourth clutch as shifting element (K4) are engaged, **in that**, for realizing a seventh forward gear (G7), the second clutch as shifting element (K2) and the third clutch as shifting element (K3) are engaged, **in that**, for realizing an eighth forward gear (G8), the second clutch as shifting element (K2) and the fourth clutch (K4) are engaged, and **in that**, for realizing a ninth forward gear (G9), the first clutch as shifting element (K1) and the second clutch as shifting element (K2) are engaged.

9. Multi-speed gearbox according to Claim 7 or 8, **characterized in that**, for realizing a first reverse gear (R1), the second brake as shifting element (B2) and the second clutch as shifting element (K2) are engaged, and/or **in that**, for realizing a first additional gear (Z1), the second brake as shifting element (B2) and the first clutch as shifting element (K1) are engaged, and/or **in that**, for realizing a second additional gear (Z2), the second brake as shifting element (B2) and the third clutch as shifting element (K3) are engaged.

10. Multi-speed gearbox according to either of the preceding Claims 1 and 6, **characterized in that** the drive (AN) is connected via a sixth shaft (6) to the planetary gear carrier (PTVS) of the front-mounted gear set (VS), **in that** the sun gear (SR) of the front-mounted gear set (VS) is connected to the housing (8), **in that** the planetary gear carrier (PTVS) of the front-mounted gear set (VS) is connectable via a sixth shaft (6) and via a third clutch as shifting element (K3) and also via the first shaft (1) of the main shifting gear set (HS) to the internal gear (HR1) of the first planetary gear set (RS1) of the main shifting gear set (HS), wherein the planetary gear carrier (PTVS) of the front-mounted gear set (VS) is connectable via the sixth shaft (6) and via a first clutch as shifting element (K1) and also via the third shaft (3) of the main shifting gear set (HS) to the planetary gear carrier (PTHS) of the stepped planetary gear (ST) of the main shifting gear set (HS), **in that** the sun gear (SR1) of the first planetary gear set (RS1) of the main shifting gear set (HS) is connectable via the fourth shaft (4) of the main shifting gear set (HS) and via a second clutch as shifting element (K2) and also via the sixth shaft (6) to the drive (AN) and to the planetary gear carrier (PTVS) of the front-mounted gear set (VS), wherein the sun gear (SR1) of the first planetary gear set (RS1) of the main shifting gear set (HS) is connectable via the fourth shaft (4) of the main shifting gear set (HS) and via a fourth clutch as shifting element (K4) and also via a seventh shaft (7) to the internal gear (HR) of the front-mounted gear set (VS), **in that** the sun gear (SR2) of the second planetary gear set (RS2) of the main shifting gear set (HS) is connectable via the fifth shaft (5) of the main shifting gear set (HS) and via a first brake as shifting element (B1) to the housing (8), **in that** the planetary gear carrier (PTHS) of the stepped planetary gear (ST) of the main shifting gear set (HS) is connectable via the third shaft (3) and via a second brake as shifting element (B2) to the housing (8), and **in that** the internal gear (HR2) of the second planetary gear set (RS2) of the main shifting gear set (HS) is connected via the second shaft (2) of the main shifting gear set (HS) to the main drive pinion (AB).

11. Multi-speed gearbox according to Claim 10, **characterized in that**, for realizing a first forward gear (G1), the first brake as shifting element (B1) and the second clutch as shifting element (K2) are engaged, **in that**, for realizing a second forward gear (G2), the first brake as shifting element (B1) and the fourth clutch as shifting element (K4) are engaged, **in that**, for realizing a third forward gear (G3), the first brake as shifting element (B1) and the first clutch as shifting element (K1) are engaged, **in that**, for realizing a fourth forward gear (G4), the first clutch as shifting element (K1) and the fourth clutch as shifting element (K4) are engaged, **in that**, for realizing a first variant of a fifth forward gear (G5, 1), the first clutch as shifting element (K1) and the third clutch as shifting element (K3) are engaged, **in that**, for realizing a second variant of the fifth forward gear (G5,2), the first clutch as shifting element (K1) and the second clutch as shifting element (K2) are engaged, **in that**, for realizing a third variant of the fifth forward gear (G5,3), the second clutch as shifting element (K2) and the third clutch as shifting element (K3) are engaged, **in that**, for realizing a sixth forward gear (G6), the third clutch as shifting element (K3) and the fourth clutch as shifting element (K4) are engaged, and **in that**, for realizing a seventh forward gear (G7), the first brake as shifting element (B1) and the third clutch as shifting element (K3) are engaged.

12. Multi-speed gearbox according to Claim 10 or 11, **characterized in that**, for realizing a first reverse gear (R1), the second brake as shifting element (B2) and the second clutch as shifting element (K2) are engaged, and/or **in that**, for realizing a second reverse gear (R2), the second brake as shifting element (B2) and the fourth clutch as shifting element (K4) are engaged, and/or **in that**, for realizing a first additional gear (Z1), the second brake as shifting element (B2) and the third clutch as shifting element (K3) are engaged.

## Revendications

1. Boîte de vitesses à plusieurs étages pour un véhicule comprenant six éléments de commutation (B1, B2, K1, K2, K3, K4) avec lesquels, par une fermeture sélective par paires, au moins sept vitesses de marche avant (G1, G2, G3, G4, G5, G5,1, G5,2, G5,3, G6, G7, G8, G9, Z1, Z2) et au moins une vitesse de marche arrière (R1, R2, R3) peuvent être réalisées, un train de roues monté devant la boîte de vitesses (VS) étant prévu en tant que train planétaire négatif, dans lequel un élément du train de roues monté devant la boîte de vitesses (VS) est connecté à un entraînement (AN) et un élément du train de roues monté devant la boîte de vitesses (VS) est connecté à un boîtier (8) et un élément du train de roues monté devant la boîte de vitesses (VS) peut être connecté à au moins un élément d'un train de roues de commutation principal (HS), le train de roues de commutation principal (HS) étant réalisé sous forme d'unité à 5 arbres, dans lequel un premier train planétaire (RS1) et un deuxième train planétaire (RS2) sont prévus, lesquels sont accouplés l'un à l'autre par le biais d'un satellite étagé (ST), au moins l'un des trains planétaires (RS1, RS2) du train de roues de commutation principal (HS) étant réalisé en tant que train planétaire négatif, **caractérisée en ce que** la couronne dentée (HR1) du premier train planétaire (RS1) du train de roues de commutation principal (HS) peut être connectée par le biais d'un premier arbre (1) du train de roues de commutation principal (HS) au boîtier (8) ou au porte-satellites (PTVS) du train de roues monté devant la boîte de vitesses (VS), **en ce que** la couronne dentée (HR2) du deuxième train planétaire (RS2) du train de roues de commutation principal (HS) est connectée par le biais d'un deuxième arbre (2) du train de roues de commutation principal (HS) à une prise de force (AB), **en ce que** le porte-satellites (PTHS) du train de roues de commutation principal (HS) peut être connecté par le biais d'un troisième arbre (3) du train de roues de commutation principal (HS) au porte-satellites (PTVS) du train de roues monté devant la boîte de vitesses (VS), **en ce que** la roue solaire (SR1) du premier train planétaire (RS1) du train de roues de commutation principal (HS) peut être connectée par le biais d'un quatrième arbre (4) du train de roues de commutation principal (HS) à l'entraînement (AN) et à la couronne dentée (HR) du train de roues monté devant la boîte de vitesses (VS), et **en ce que** la roue solaire (SR2) du deuxième train planétaire (RS2) du train de roues de commutation principal (HS) peut être connectée par le biais d'un cinquième arbre (5) du train de roues de commutation principal (HS) au boîtier (8) et/ou à l'entraînement.

2. Boîte de vitesses à plusieurs étages selon la revendication 1, **caractérisée en ce que** le premier train planétaire (RS1) et le deuxième train planétaire (RS2) du train de roues de commutation principal (HS) sont chacun réalisés sous forme de train planétaire négatif.

3. Boîte de vitesses à plusieurs étages selon la revendication 1 ou 2, **caractérisée en ce que** l'entraînement (AN) est connecté par le biais d'un sixième arbre (6) à la couronne dentée (HR) du train de roues monté devant la boîte de vitesses (VS), **en ce que** la roue solaire (SR) du train de roues monté devant la boîte de vitesses (VS) est connectée au boîtier (8), **en ce que** le porte-satellites (PTVS) du train de roues monté devant la boîte de vitesses (VS) peut être connecté par le biais d'un septième arbre (7) et par le biais d'un quatrième embrayage en tant qu'élément de commutation (K4) et par le biais du quatrième arbre (4) du train de roues de commutation principal (HS) à la roue solaire (SR1) du premier train planétaire (RS1) du train de roues de commutation principal (HS), le porte-satellites (PTVS) du train de roues monté devant la boîte de vitesses (VS) pouvant être connecté par le biais du septième arbre (7) et par le biais d'un troisième embrayage en tant qu'élément de commutation (K3) ainsi que par le biais du troisième arbre (3) du train de roues de commutation principal (HS) au porte-satellites (PTHS) du satellite étagé (ST) du train de roues de commutation principal (HS), **en ce que** la prise de force (AB) est connectée par le biais du deuxième arbre (2) du train de roues de commutation principal (HS) à la couronne dentée (HR2) du deuxième train planétaire (RS2) du train de roues de commutation principal (HS), **en ce que** la roue solaire (SR1) du premier train planétaire (RS1) du train de roues de commutation principal (HS) peut être connectée par le biais du quatrième arbre (4) du train de roues de commutation principal (HS) et par le biais d'un premier embrayage en tant qu'élément de commutation (K1) ainsi que par le biais du sixième arbre (6) à l'entraînement (AN) et à la couronne dentée (HR) du train de roues monté devant la boîte de vitesses (VS), la roue solaire (SR1) du premier train planétaire (RS1) du train de roues de commutation principal (HS) pouvant être connectée par le biais du quatrième arbre (4) du train de roues de commutation principal (HS) et par le biais du premier embrayage en tant qu'élément de commutation (K1) ainsi que par le biais d'un deuxième embrayage en tant qu'élément de commutation (K2) et par le biais du cinquième arbre (5) du train de roues de commutation principal (HS) à la roue solaire (SR2) du deuxième train planétaire (RS2) du train de roues de commutation principal (HS), **en ce que** la roue solaire (SR2) du deuxième train planétaire (RS2) du train de roues de commutation principal (HS) peut être connectée par le biais du cinquième arbre (5) du train de roues de commutation principal (HS) et par le biais du deuxième embrayage en tant qu'élément de commutation (K2) ainsi que par le biais du sixième arbre (6) à l'entraînement (AN) et à la couronne dentée (HR) du train de roues monté devant la boîte de vitesses (VS), **en ce que** le porte-satellites (PTHS) du satellite étagé (ST) du train de roues de commutation principal (HS) peut être connecté par le biais du troisième arbre (3) et par le biais d'un deuxième frein en tant qu'élément de commutation (B2) au boîtier (8), et **en ce que** la couronne dentée (HR1) du premier train planétaire (RS1) du train de roues de commutation principal (HS) peut être connectée par le biais du premier arbre (1) du train de roues de commutation principal (HS) et par le biais d'un premier frein en tant qu'élément de commutation (B1) au boîtier (8) .

4. Boîte de vitesses à plusieurs étages selon la revendication 3, **caractérisée en ce que** pour réaliser une première vitesse de marche avant (G1), le premier frein en tant qu'élément de commutation (B1) et le quatrième embrayage en tant qu'élément de commutation (K4) sont fermés, **en ce que** pour réaliser une deuxième vitesse de marche avant (G2), le premier frein en tant qu'élément de commutation (B1) et le premier embrayage en tant qu'élément de commutation (K1) sont fermés, **en ce que** pour réaliser une troisième vitesse de marche avant (G3), le premier frein en tant qu'élément de commutation (B1) et le deuxième embrayage en tant qu'élément de commutation (K2) sont fermés, **en ce que** pour réaliser une quatrième vitesse de marche avant (G4), le premier frein en tant qu'élément de commutation (B1) et le troisième embrayage en tant qu'élément de commutation (K3) sont fermés, **en ce que** pour réaliser une cinquième vitesse de marche avant (G5), le deuxième embrayage en tant qu'élément de commutation (K2) et le troisième embrayage en tant qu'élément de commutation (K3) sont fermés, **en ce que** pour réaliser une sixième vitesse de marche avant (G6), le premier embrayage en tant qu'élément de commutation (K1) et le troisième embrayage en tant qu'élément de commutation (K3) sont fermés, **en ce que** pour réaliser une septième vitesse de marche avant (G7), le premier embrayage en tant qu'élément de commutation (K1) et le deuxième embrayage en tant qu'élément de commutation (K2) sont fermés, et **en ce que** pour réaliser une huitième vitesse de marche avant (G8), le deuxième embrayage en tant qu'élément de commutation (K2) et le quatrième embrayage en tant qu'élément de commutation (K4) sont fermés.

5. Boîte de vitesses à plusieurs étages selon la revendication 3 ou 4, **caractérisée en ce que** pour réaliser une première vitesse de marche arrière (R1), le deuxième frein en tant qu'élément de commutation (B2) et le quatrième embrayage en tant qu'élément de commutation (K4) sont fermés et/ou **en ce que** pour réaliser une deuxième vitesse de marche arrière (R2), le deuxième frein en tant qu'élément de commutation (B2) et le premier embrayage en tant qu'élément de commutation (K1) sont fermés et/ou **en ce que** pour réaliser la troisième vitesse de marche arrière (R3), le deuxième frein en tant qu'élément de commutation (B2) et le deuxième embrayage en tant qu'élément de commutation (K2) sont fermés et/ou **en ce que** pour réaliser une vitesse supplémentaire (Z1), le troisième embrayage en tant qu'élément de commutation (K3) et le quatrième embrayage en tant qu'élément de commutation (K4) sont fermés.

6. Boîte de vitesses à plusieurs étages selon la revendication 1, **caractérisée en ce que** le premier train planétaire (RS1) du train de roues de commutation principal (HS) est réalisé en tant que train planétaire négatif et le deuxième train planétaire (RS2) du train de roues de commutation principal (HS) est réalisé en tant que train planétaire positif.

7. Boîte de vitesses à plusieurs étages selon l'une quelconque des revendications 1 ou 6, **caractérisée en ce que** l'entraînement (AN) est connecté par le biais d'un sixième arbre (6) à la couronne dentée (HR) du train de roues monté devant la boîte de vitesses (VS), **en ce que** la roue solaire (SR) du train de roues monté devant la boîte de vitesses (VS) est connectée au boîtier (8), **en ce que** le porte-satellites (PTVS) du train de roues monté devant la boîte de vitesses (VS) peut être connecté par le biais d'un septième arbre (7) et par le biais d'un troisième embrayage en tant qu'élément de commutation (K3) ainsi que par le biais du troisième arbre (3) du train de roues de commutation principal (HS) au porte-satellites (PTHS) du satellite étagé (ST) du train de roues de commutation principal (HS), le porte-satellites (PTVS) du train de roues monté devant la boîte de vitesses (VS) pouvant être connecté par le biais du septième arbre (7) et par le biais d'un quatrième embrayage en tant qu'élément de commutation (K4) ainsi que par le biais du quatrième arbre (4) à la roue solaire (SR1) du premier train planétaire (RS1) du train de roues de commutation principal (HS), **en ce que** la roue solaire (SR1) du premier train planétaire (RS1) du train de roues de commutation principal (HS) peut être connectée par le biais du quatrième arbre (4) du train de roues de commutation principal (HS) et par le biais d'un premier embrayage en tant qu'élément de commutation (K1) ainsi que par le biais du sixième arbre (6) à l'entraînement (AN) et à la couronne dentée (HR) du train de roues monté devant la boîte de vitesses (VS), **en ce que** la roue solaire (SR2) du deuxième train planétaire (RS2) du train de roues de commutation principal (HS) peut être connectée par le biais du cinquième arbre (5) du train de roues de commutation principal (HS) et par le biais d'un deuxième embrayage en tant qu'élément de commutation (K2) ainsi que par le biais du sixième arbre (6) à l'entraînement (AN) et à la couronne dentée (HR) du train de roues monté devant la boîte de vitesses (VS), la roue solaire (SR2) du deuxième train planétaire (RS2) du train de roues de commutation principal (HS) pouvant être connectée par le biais du cinquième arbre (5) du train de roues de commutation principal (HS) et par le biais du deuxième embrayage en tant qu'élément de commutation (K2) ainsi que par le biais du sixième arbre (6) et par le biais du premier embrayage en tant qu'élément de commutation (K1) ainsi que par le biais du quatrième arbre (4) du train de roues de commutation principal (HS) à la roue solaire (SR1) du premier train planétaire (RS1) du train de roues de commutation principal (HS), et la roue solaire (SR2) du deuxième train planétaire (RS2) du train de roues de commutation principal (HS) pouvant être connectée par le biais du cinquième arbre (5) du train de roues de commutation principal (HS) et par le biais d'un premier frein en tant qu'élément de commutation (B1) au boîtier (8), **en ce que** la couronne dentée (HR2) du deuxième train planétaire (RS2) du train de roues de commutation principal (HS) est connectée par le biais du deuxième arbre (2) du train de roues de commutation principal (HS) à la prise de force (AB), et **en ce que** la couronne dentée (HR1) du premier train planétaire (RS1) du train de roues de commutation principal (HS) peut être connectée par le biais du premier arbre (1) du train de roues de commutation principal (HS) et par le biais d'un deuxième frein en tant qu'élément de commutation (B2) au boîtier (8).

8. Boîte de vitesses à plusieurs étages selon la revendication 7, **caractérisée en ce que** pour réaliser une première vitesse de marche avant (G1), le deuxième frein en tant qu'élément de commutation (B2) et le quatrième embrayage en tant qu'élément de commutation (K4) sont fermés, **en ce que** pour réaliser une deuxième vitesse de marche avant (G2), le premier frein en tant qu'élément de commutation (B1) et le quatrième embrayage en tant qu'élément de commutation (K4) sont fermés, **en ce que** pour réaliser une troisième vitesse de marche avant (G3), le premier frein en tant qu'élément de commutation (B1) et le premier embrayage en tant qu'élément de commutation (K1) sont fermés, **en ce que** pour réaliser une quatrième vitesse de marche avant (G4), le premier frein en tant qu'élément de commutation (B1) et le troisième embrayage en tant qu'élément de commutation (K3) sont fermés, **en ce que** pour réaliser une cinquième vitesse de marche avant (G5), le premier embrayage en tant qu'élément de commutation (K1) et le troisième embrayage en tant qu'élément de commutation (K3) sont fermés, **en ce que** pour réaliser une sixième vitesse de marche avant (G6), le troisième embrayage en tant qu'élément de commutation (K3) et le quatrième embrayage en tant qu'élément de commutation (K4) sont fermés, **en ce que** pour réaliser une septième vitesse de marche avant (G7), le deuxième embrayage en tant qu'élément de commutation (K2) et le troisième embrayage en tant que élément de commutation (K3) sont fermés, **en ce que** pour réaliser une huitième vitesse de marche avant (G8), le deuxième embrayage en tant qu'élément de commutation (K2) et le quatrième embrayage (K4) sont fermés, et **en ce que** pour réaliser une neuvième vitesse de marche avant (G9), le premier embrayage en tant qu'élément de commutation (K1) et le deuxième embrayage en tant qu'élément de commutation (K2) sont fermés.

9. Boîte de vitesses à plusieurs étages selon la revendication 7 ou 8, **caractérisée en ce que** pour réaliser une première vitesse de marche arrière (R1), le deuxième frein en tant qu'élément de commutation (B2) et le deuxième embrayage en tant qu'élément de commutation (K2) sont fermés et/ou **en ce que** pour réaliser une première vitesse supplémentaire (Z1), le deuxième frein en tant qu'élément de commutation (B2) et le premier embrayage en tant qu'élément de commutation (K1) sont fermés et/ou **en ce que** pour réaliser une deuxième vitesse supplémentaire (Z2), le deuxième frein en tant qu'élément de commutation (B2) et le troisième embrayage en tant qu'élément de commutation (K3) sont fermés.

10. Boîte de vitesses à plusieurs étages selon l'une quelconque des revendications précédentes 1 ou 6, **caractérisée en ce que** l'entraînement (AN) est connecté par le biais d'un sixième arbre (6) au porte-satellites (PTVS) du train de roues monté devant la boîte de vitesses (VS), **en ce que** la roue solaire (SR) du train de roues monté devant la boîte de vitesses (VS) est connectée au boîtier (8), **en ce que** le porte-satellites (PTVS) du train de roues monté devant la boîte de vitesses (VS) peut être connecté par le biais d'un sixième arbre (6) et par le biais d'un troisième embrayage en tant qu'élément de commutation (K3) ainsi que par le biais du premier arbre (1) du train de roues de commutation principal (HS) à la couronne dentée (HR1) du premier train planétaire (RS1) du train de roues de commutation principal (HS), le porte-satellites (PTVS) du train de roues monté devant la boîte de vitesses (VS) pouvant être connecté par le biais du sixième arbre (6) et par le biais d'un premier embrayage en tant qu'élément de commutation (K1) ainsi que par le biais du troisième arbre (3) du train de roues de commutation principal (HS) au porte-satellites (PTHS) du satellite étagé (ST) du train de roues de commutation principal (HS), **en ce que** la roue solaire (SR1) du premier train planétaire (RS1) du train de roues de commutation principal (HS) peut être connectée par le biais du quatrième arbre (4) du train de roues de commutation principal (HS) et par le biais d'un deuxième embrayage en tant qu'élément de commutation (K2) ainsi que par le biais du sixième arbre (6) à l'entraînement (AN) et au porte-satellites (PTVS) du train de roues monté devant la boîte de vitesses (VS), la roue solaire (SR1) du premier train planétaire (RS1) du train de roues de commutation principal (HS) pouvant être connectée par le biais du quatrième arbre (4) du train de roues de commutation principal (HS) et par le biais d'un quatrième embrayage en tant qu'élément de commutation (K4) ainsi que par le biais d'un septième arbre (7) à la couronne dentée (HR) du train de roues monté devant la boîte de vitesses (VS), **en ce que** la roue solaire (SR2) du deuxième train planétaire (RS2) du train de roues de commutation principal (HS) peut être connectée par le biais du cinquième arbre (5) du train de roues de commutation principal (HS) et par le biais d'un premier frein en tant qu'élément de commutation (B1) au boîtier (8), **en ce que** le porte-satellites (PTHS) du satellite étagé (ST) du train de roues de commutation principal (HS) peut être connecté par le biais du troisième arbre (3) et par le biais d'un deuxième frein en tant qu'élément de commutation (B2) au boîtier (8), et **en ce que** la couronne dentée (HR2) du deuxième train planétaire (RS2) du train de roues de commutation principal (HS) est connectée par le biais du deuxième arbre (2) du train de roues de commutation principal (HS) à la prise de force (AB).

11. Boîte de vitesses à plusieurs étages selon la revendication 10, **caractérisée en ce que** pour réaliser une première vitesse de marche avant (G1), le premier frein en tant qu'élément de commutation (B1) et le deuxième embrayage en tant qu'élément de commutation (K2) sont fermés, **en ce que** pour réaliser une deuxième vitesse de marche avant (G2), le premier frein en tant qu'élément de commutation (B1) et le quatrième embrayage en tant qu'élément de commutation (K4) sont fermés, **en ce que** pour réaliser une troisième vitesse de marche avant (G3), le premier frein en tant qu'élément de commutation (B1) et le premier embrayage en tant qu'élément de commutation (K1) sont fermés, **en ce que** pour réaliser une quatrième vitesse de marche avant (G4), le premier embrayage en tant qu'élément de commutation (K1) et le quatrième embrayage en tant qu'élément de commutation (K4) sont fermés, **en ce que** pour réaliser une première variante d'une cinquième vitesse de marche avant (G5, 1), le premier embrayage en tant qu'élément de commutation (K1) et le troisième embrayage en tant qu'élément de commutation (K3) sont fermés, **en ce que** pour réaliser une deuxième variante de la cinquième vitesse de marche avant (G5, 2), le premier embrayage en tant qu'élément de commutation (K1) et le deuxième embrayage en tant qu'élément de commutation (K2) sont fermés, **en ce que** pour réaliser une troisième variante de la cinquième vitesse de marche avant (G5, 3), le deuxième embrayage en tant qu'élément de commutation (K2) et le troisième embrayage en tant qu'élément de commutation (K3) sont fermés, **en ce que** pour réaliser une sixième vitesse de marche avant (G6), le troisième embrayage en tant qu'élément de commutation (K3) et le quatrième embrayage en tant qu'élément de commutation (K4) sont fermés, et **en ce que** pour réaliser une septième vitesse de marche avant (G7), le premier frein en tant qu'élément de commutation (B1) et le troisième embrayage en tant qu'élément de commutation (K3) sont fermés.

12. Boîte de vitesses à plusieurs étages selon la revendication 10 ou 11, **caractérisée en ce que** pour réaliser une première vitesse de marche arrière (R1), le deuxième frein en tant qu'élément de commutation (B2) et le deuxième embrayage en tant qu'élément de commutation (K2) sont fermés, et/ou **en ce que** pour réaliser une deuxième vitesse de marche arrière (R2), le deuxième frein en tant qu'élément de commutation (B2) et le quatrième embrayage en tant qu'élément de commutation (K4) sont fermés, et/ou **en ce que** pour réaliser une première vitesse supplémentaire (Z1), le deuxième frein en tant qu'élément de commutation (B2) et le troisième embrayage en tant qu'élément de commutation (K3) sont fermés.
